# DEMANDE DE BREVET EUROPEEN

(11) **EP 3 790 028 A1**
(43) Date de publication de la demande: **10.03.2021**
(21) Numéro de dépôt: 20194407.1
(22) Date de dépôt: 03.09.2020
(51) Int. Cl.: H01F 30/04, B60L 53/30

(54) **TRANSFORMATEUR MULTI-SECONDAIRE**

(30) Priorité: 06.09.2019 FR 1909852
(71) Demandeur: Schneider Electric Industries SAS, 92500 Rueil Malmaison (FR)
(72) Inventeur: NASCIMENTO TELLES DE MORAES, Diogo, 38050 GRENOBLE Cedex 09 (FR); RANALLETTA, Gianluca, 38050 GRENOBLE Cedex 09 (FR); MERCIER-MARICAL, Serge, 38050 GRENOBLE Cedex 09 (FR)
(74) Mandataire: Brevalex

(57) **Abrégé**

Transformateur comportant un noyau magnétique (41) ayant un axe central, un enroulement primaire (11) et une pluralité d'enroulements secondaires (13₁₁ à 13₁₂, 13₂₁ à 13₂₂), tous les enroulements étant concentriques autour de l'axe central du noyau magnétique, caractérisé en ce que la pluralité d'enroulements secondaires est répartie en au moins une couche d'enroulements (12₁, 12₂), l'au moins une couche d'enroulements comportant un nombre prédéterminé d'enroulements secondaires disposés les uns à côté des autres, chaque enroulement secondaire comportant un même nombre de spires réparties sur sensiblement la longueur du noyau magnétique (41), les distances respectives des enroulements secondaires à l'enroulement primaire (11) étant dans une plage prédéterminée.

## Description

### Domaine technique

La présente invention concerne le domaine des transformateurs électriques. Elle concerne plus particulièrement les transformateurs électriques comportant un circuit primaire et plusieurs circuits secondaires.

Un tel transformateur trouve des applications dans différents domaines de la distribution électrique, par exemple dans des circuits de distribution électrique incluant une production photovoltaïque ou éolienne de l'électricité.

Dans la suite, on considère à titre d'exemple un transformateur destiné à une station de charge de véhicules électriques.

### État de l'art antérieur

Une station de charge de véhicules électriques comporte globalement un transformateur avec un enroulement primaire haute tension et au moins un enroulement secondaire basse tension. L'enroulement secondaire basse tension est relié à un point de charge de véhicule électrique, auquel un utilisateur raccorde son véhicule pour en recharger la batterie.

Une station de charge de véhicules électriques comporte généralement une pluralité de points de charge, par exemple six points de charge. Chacun des points de charge est relié à la sortie d'un enroulement secondaire basse tension. Il est nécessaire que tous les points de charges présentent les mêmes caractéristiques électriques, notamment une même tension de court-circuit, des ampères-tours équilibrés, quel que soit le nombre de points de charge utilisés simultanément.

Il est possible de prévoir autant de transformateurs que de points de charge dans la station de charge. Cependant cette solution est coûteuse.

Par ailleurs, EP 2 546 335 décrit un transformateur comportant un noyau magnétique, un enroulement primaire et des enroulements secondaires. Les enroulements secondaires sont répartis en étant séparés les uns des autres par des intervalles, dans la direction d'un axe central du noyau magnétique. Chaque enroulement secondaire est en vis à vis de seulement une partie de l'enroulement primaire et du noyau magnétique.

CN203085334 décrit une structure de transformateur présentant une pluralité d'enroulements secondaires reliés en série. Les distances des enroulements secondaires à l'enroulement primaire sont croissantes d'un enroulement secondaire au suivant, de même que les tensions générées par les enroulements secondaires sont croissantes d'un enroulement secondaire au suivant. Ce type de structure ne permet pas de délivrer des tensions identiques par les enroulements secondaires.

EP 0 097 367 décrit un transformateur de type à structure divisée. Il comporte un enroulement primaire en deux parties correspondant respectivement à deux enroulements secondaires divisés. Cette structure est similaire à deux transformateurs en parallèle sur un même noyau. Si un seul des enroulements secondaires est relié à une charge, seule la partie d'enroulement primaire lui correspondant est activée, et l'autre enroulement primaire et l'autre enroulement secondaire sont désactivés, ce qui produit un déséquilibre des flux de fuite.

US 2006 0091988 décrit un transformateur comportant un enroulement primaire et plusieurs enroulements secondaires disposés dans des fentes d'enroulement formées le long d'un noyau central. Le transformateur comporte des parois isolantes. L'enroulement primaire et les enroulements secondaires ne sont pas en vis-à-vis et sont en vis-à-vis de seulement une partie du noyau central.

Aucune de ces structures ne présente des circuits secondaires qui ont les mêmes caractéristiques électriques, notamment une même tension de court-circuit, des ampères-tours équilibrés, quel que soit le nombre de circuits secondaires utilisés simultanément.

Ces structures ne conviennent pas à des applications nécessitant ces caractéristiques. Notamment, elles ne conviennent pas à une station de charge de véhicules électriques comportant une pluralité de points de charge, avec un unique transformateur et dont les points de charge peuvent fonctionner indépendamment les uns des autres.

### Exposé de l'invention

L'invention vise à résoudre les problèmes de la technique antérieure en fournissant un transformateur comportant un noyau magnétique ayant un axe central, un enroulement primaire et une pluralité d'enroulements secondaires, tous les enroulements étant concentriques autour de l'axe central du noyau magnétique, caractérisé en ce que la pluralité d'enroulements secondaires est répartie en au moins une couche d'enroulements, l'au moins une couche d'enroulements comportant un nombre prédéterminé d'enroulements secondaires disposés les uns à côté des autres, chaque enroulement secondaire comportant un même nombre de spires réparties sur sensiblement la longueur du noyau magnétique, les distances respectives des enroulements secondaires à l'enroulement primaire étant dans une plage prédéterminée.

L'invention propose un transformateur avec plusieurs circuits secondaires qui ont les mêmes caractéristiques électriques, notamment une même tension de court-circuit, des ampères-tours équilibrés, quel que soit le nombre de circuits secondaires utilisés simultanément.

Les tensions ou impédances de court-circuit des enroulements secondaires sont sensiblement égales entre elles.

Les enroulements secondaires embrassent tous le même flux magnétique.

Selon une caractéristique préférée, l'au moins une couche d'enroulements secondaires comporte dans la direction de l'axe central du noyau magnétique une superposition de spires des enroulements secondaires, en alternance et selon un motif répétitif.

Selon une caractéristique préférée, les distances respectives des enroulements secondaires à l'enroulement primaire sont sensiblement égales.

Selon une caractéristique préférée, le transformateur selon l'invention est utilisé dans une station de charge de véhicules électriques.

L'invention concerne aussi une station de charge de véhicules électriques, comportant un transformateur tel que précédemment décrit.

Grâce à l'invention, il est possible de concevoir une station de charge de véhicules électriques comportant une pluralité de points de charge, par exemple six, avec un unique transformateur. Chacun des points de charge est relié à un enroulement secondaire du transformateur. Les enroulements secondaires du transformateur peuvent fonctionner indépendamment les uns des autres, et sont isolés les uns des autres.

Les points de charge sont ainsi utilisables indépendamment les uns des autres.

L'invention concerne aussi un procédé de fabrication d'un transformateur, comportant un noyau magnétique ayant un axe central, un enroulement primaire et une pluralité d'enroulements secondaires, tous les enroulements étant concentriques autour de l'axe central du noyau magnétique, caractérisé en ce qu'il comporte des étapes de répartition de la pluralité d'enroulements secondaires en au moins une couche d'enroulements, de formation de l'au moins une couche d'enroulements pour qu'elle comporte un même nombre d'enroulements secondaires disposés les uns à côté des autres, et de formation de chaque enroulement secondaire pour qu'il comporte un même nombre de spires réparties sur sensiblement la longueur du noyau magnétique et pour que les distances respectives des enroulements secondaires à l'enroulement primaire soient dans une plage prédéterminée.

Le procédé présente des avantages analogues à ceux précédemment présentés.

### Brève description des dessins

D'autres caractéristiques et avantages apparaîtront à la lecture de la description suivante d'un mode de réalisation préféré, donné à titre d'exemple non limitatif, décrit en référence aux figures dans lesquelles :
La Figure 1 représente un transformateur pour station de charge de véhicules électriques selon un mode de réalisation de l'invention,
La Figure 2 représente une vue en coupe du transformateur pour station de charge de véhicules électriques selon un mode de réalisation de l'invention,
La Figure 3 représente une vue en coupe schématique du transformateur pour station de charge de véhicules électriques selon un mode de réalisation de l'invention,
La Figure 4 représente un procédé de fabrication du transformateur pour station de charge de véhicules électriques tel que représenté aux figures précédentes, selon un mode de réalisation de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### Description détaillée de l'invention

Comme précisé précédemment, on considère à titre d'exemple un transformateur pour une station de charge de véhicules électriques. Seuls les éléments utiles à la compréhension de l'invention seront décrits. En particulier, la station de charge de véhicules électriques n'est pas décrite dans son intégralité.

Bien entendu, le transformateur selon l'invention est utilisable pour d'autres applications.

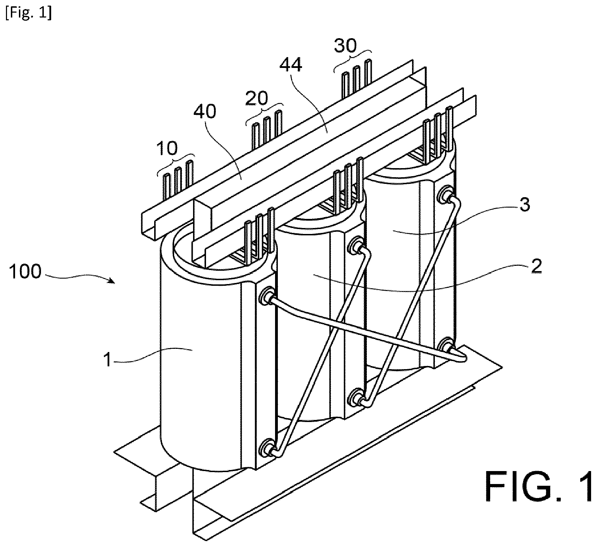

Selon un mode de réalisation préféré représenté à la **figure 1****,** un transformateur pour station de charge de véhicules électriques selon l'invention est un transformateur triphasé 100.

Le transformateur 1 comporte ainsi trois phases 1, 2 et 3 qui peuvent être vues comme trois transformateurs monophasés couplés. Les trois phases 1, 2 et 3 ont une architecture similaire et comportent des éléments similaires. Ainsi, comme détaillé dans la suite, chacune des phases du transformateur comporte un enroulement primaire et des enroulements secondaires autour d'un noyau magnétique commun 40.

Le noyau magnétique 40 comporte trois colonnes parallèles et alignées (non visibles sur la figure 1) autour desquelles sont formées respectivement les trois phases 1, 2 et 3 du transformateur. Les trois colonnes parallèles forment les trois noyaux des phases 1, 2 et 3. Les trois colonnes parallèles sont reliées entre elles à leurs extrémités par deux branches de liaison parallèles entre elles et perpendiculaires aux trois branches parallèles. Seule la branche de liaison supérieure 44 est visible à la figure 1.

Chacune des phases du transformateur comporte une pluralité 10, 20 et 30 de bornes de sortie des enroulements secondaires. Dans l'exemple représenté, chaque phase comporte six bornes de sortie. Les bornes de sorties des enroulements secondaires sont respectivement reliées à des points de charge de véhicule électrique, indépendants les uns des autres.

Dans la suite, on considère l'un des transformateurs monophasés.

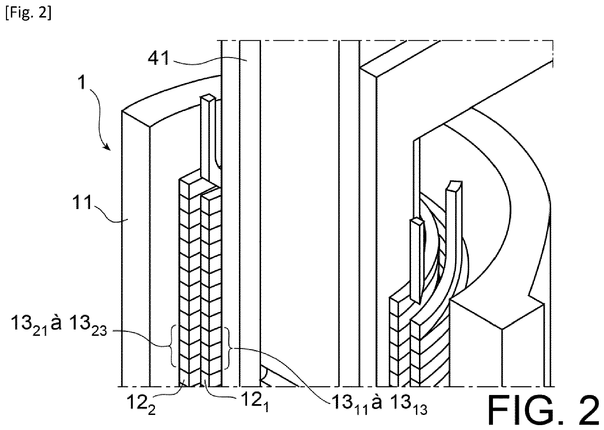

En référence à la **figure 2****,** le noyau magnétique 41 du transformateur monophasé 1 est l'une des colonnes du noyau magnétique 40. Le noyau magnétique 41 comporte un axe central.

L'enroulement primaire 11 est disposé de manière concentrique autour de l'axe central du noyau magnétique 41.

Les enroulements secondaires sont disposés de manière concentrique autour de l'axe central du noyau magnétique 41, entre le noyau magnétique 41 et l'enroulement primaire 11. Les enroulements secondaires sont répartis en au moins une couche. Il est possible de répartir les enroulements secondaires sur une pluralité de couches réparties orthogonalement à l'axe central du noyau magnétique 41. Le nombre de couches dépend du nombre d'enroulements secondaires souhaités. En effet, une même couche ne peut comporter qu'un nombre maximal d'enroulements secondaires.

Le mode de réalisation représenté comporte deux couches 12₁ et 12₂.

Dans les cas où le nombre de couches est supérieur ou égal à 2, toutes les couches d'enroulements secondaires comportent un même nombre X d'enroulements, avec X entier supérieur à 2. Le nombre d'enroulements est égal à trois dans l'exemple représenté. Ainsi la couche 12₁ comporte les enroulements 13₁₁ à 13₁₃ et la couche 12₂ comporte les enroulements 13₂₁ à 13₂₃. Au total, le transformateur monophasé 1 comporte 6 enroulements secondaires.

La distance radiale entre les couches d'enroulements secondaires est la plus réduite possible. Ainsi, la distance de chaque enroulement secondaire à l'enroulement primaire est dans une plage prédéterminée de distance. La distance de chaque enroulement secondaire à l'enroulement primaire est avantageusement comprise entre 20 mm (millimètres) et 150 mm, voire entre 30 mm et 100 mm, voire entre 45 mm et 80 mm, en particulier pour une tension nominale de l'enroulement primaire égale à 20 kV (kilovolt).

De manière générale, la distance de chaque enroulement secondaire à l'enroulement primaire est telle que la valeur de la tension de court-circuit de chaque enroulement secondaire par rapport à l'enroulement primaire reste dans une plage prédéterminée. La valeur de tension de court-circuit d'un enroulement secondaire est égale à la valeur de tension de court-circuit de l'enroulement primaire divisée par le nombre d'enroulements secondaires. La valeur de tension de court-circuit de chaque enroulement secondaire est avantageusement supérieure à 1%, voire supérieure à 2%, voire supérieure à 5% de la puissance nominale du transformateur (en prenant en compte une éventuelle surcharge).

Etant donné que les enroulements secondaires sont tous sensiblement à la même distance de l'enroulement primaire, tous les enroulements secondaires présentent des tensions de court-circuit respectives sensiblement égales.

Chaque enroulement secondaire est formé par un conducteur dont les spires sont enroulées en hélice selon un rayon constant et réparties régulièrement sur une longueur sensiblement égale à la longueur du noyau magnétique 41. Tous les enroulements secondaires ont le même nombre de spires réparties sur la même longueur. Tous les enroulements secondaires recouvrent sensiblement la longueur du noyau magnétique 41 ce qui permet un équilibre des ampères-tours.

Une couche comporte dans la direction de l'axe central du noyau magnétique 41 une superposition des spires des conducteurs qui la composent, en alternance et selon un motif répétitif.

Selon une variante, les conducteurs de chaque couche sont réalisés selon la technologie CTC (d'après l'anglais Continuously Transposed Cable). Dans ce cas, un conducteur est formé d'un ensemble de sous-conducteurs isolés les uns des autres, par exemple de section plate ou rectangulaire, et agencés côte à côte. Ce type de conducteur permet de réduire les pertes électriques, notamment par courant de Foucault.

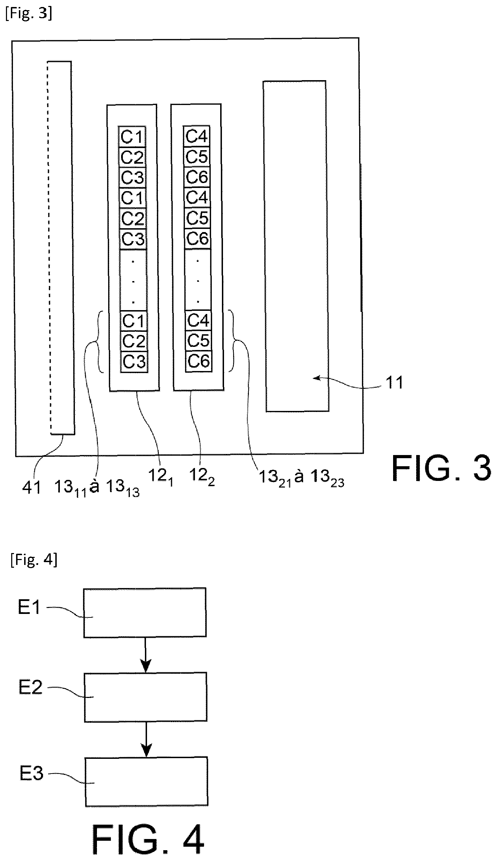

La **figure 3** illustre l'alternance des spires des deux couches de l'exemple décrit. Les couches sont situées entre le noyau magnétique 41 et l'enroulement primaire 11.

La couche 12₁ comporte les enroulements 13₁₁ à 13₁₃. Les enroulements 13₁₁ à 13₁₃ sont respectivement constitués de conducteurs C1 à C3. La couche 12₁ comporte le motif répétitif C1-C2-C3 dans une direction parallèle à l'axe central du noyau magnétique 41.

De manière similaire, la couche 12₂ comporte les enroulements 13₂₁ à 13₂₃. Les enroulements 13₂₁ à 13₂₃ sont respectivement constitués de conducteurs C4 à C6. La couche 12₂ comporte le motif répétitif C4-C5-C6 dans une direction parallèle à l'axe central du noyau magnétique 41.

La **figure 4** représente le procédé de fabrication du transformateur tel que précédemment décrit, selon un mode de réalisation de l'invention.

Comme précédemment exposé, le transformateur comporte un noyau magnétique ayant un axe central, un enroulement primaire haute tension et une pluralité d'enroulements secondaires basse tension. Le procédé porte plus particulièrement sur la formation des enroulements secondaires.

Le procédé comporte une étape E1 de répartition de la pluralité d'enroulements secondaires en au moins une couche d'enroulements. Le nombre de couches est choisi en fonction du nombre d'enroulements secondaires souhaités.

L'étape E1 est suivie d'une étape E2 de formation de chaque couche pour qu'elle comporte un même nombre d'enroulements secondaires disposés les uns à côté des autres. Dans le cas où le nombre de couches est supérieur ou égal à 2, les couches sont dans une plage prédéterminée de distance à l'enroulement primaire, et sont de préférence sensiblement à la même distance de l'enroulement primaire.

L'étape E2 est suivie d'une étape E3 de formation de chaque enroulement secondaire pour qu'il comporte un même nombre de spires réparties sur sensiblement la longueur du noyau magnétique. Les spires des enroulements secondaires d'une même couche sont formées et superposées selon un motif régulier dans une direction parallèle à l'axe central du noyau.

A titre d'exemple, la gamme de puissance du transformateur selon l'invention est de 400 kVA à 5 MVA, le niveau de tension du circuit primaire peut aller jusqu'à 36 kV et le niveau de tension de chaque circuit secondaire peut aller jusqu'à 1 kV.

## Revendications

1. Transformateur comportant un noyau magnétique (41) ayant un axe central, un enroulement primaire (11) et une pluralité d'enroulements secondaires (13₁₁ à 13₁₂, 13₂₁ à 13₂₂), tous les enroulements étant concentriques autour de l'axe central du noyau magnétique, **caractérisé en ce que** la pluralité d'enroulements secondaires est répartie en au moins une couche d'enroulements (12₁, 12₂), l'au moins une couche d'enroulements comportant un nombre prédéterminé d'enroulements secondaires disposés les uns à côté des autres, chaque enroulement secondaire comportant un même nombre de spires réparties sur sensiblement la longueur du noyau magnétique (41), les distances respectives des enroulements secondaires à l'enroulement primaire (11) étant dans une plage prédéterminée.

2. Transformateur selon la revendication 1, dans lequel l'au moins une couche d'enroulements secondaires comporte dans la direction de l'axe central du noyau magnétique une superposition de spires des enroulements secondaires, en alternance et selon un motif répétitif.

3. Transformateur selon la revendication 1 ou 2, dans lequel les distances respectives des enroulements secondaires à l'enroulement primaire sont sensiblement égales.

4. Transformateur selon l'une quelconque des revendications 1 à 3, utilisé dans une station de charge de véhicules électriques.

5. Station de charge de véhicules électriques, comportant un transformateur selon l'une quelconque des revendications 1 à 4.

6. Procédé de fabrication d'un transformateur, comportant un noyau magnétique (41) ayant un axe central, un enroulement primaire (11) et une pluralité d'enroulements secondaires (13₁₁ à 13₁₂, 13₂₁ à 13₂₂), tous les enroulements étant concentriques autour de l'axe central du noyau magnétique, **caractérisé en ce qu'**il comporte des étapes de répartition (E1) de la pluralité d'enroulements secondaires en au moins une couche d'enroulements, de formation (E2) de l'au moins une couche d'enroulements pour qu'elle comporte un même nombre d'enroulements secondaires disposés les uns à côté des autres, et de formation (E3) de chaque enroulement secondaire pour qu'il comporte un même nombre de spires réparties sur sensiblement la longueur du noyau magnétique et pour que les distances respectives des enroulements secondaires à l'enroulement primaire soient dans une plage prédéterminée.
